(19) Europäisches Patentamt
European Patent Office
Office européen des brevets

(11) **EP 2 002 455 B1**

(12) **FASCICULE DE BREVET EUROPEEN**

(45) Date de publication et mention
de la délivrance du brevet:
**04.12.2013 Bulletin 2013/49**

(51) Int Cl.:
***H01H 9/16*** *(2006.01)*     ***H01H 1/60*** *(2006.01)*
***H02H 3/04*** *(2006.01)*     ***H01H 71/04*** *(2006.01)*

(21) Numéro de dépôt: **07727702.8**

(22) Date de dépôt: **03.04.2007**

(86) Numéro de dépôt international:
**PCT/EP2007/053231**

(87) Numéro de publication internationale:
**WO 2007/113295 (11.10.2007 Gazette 2007/41)**

(54) **DISPOSITIF DE DETECTION D'ETAT D'UN INTERRUPTEUR**

ANORDNUNG ZUR ZUSTANDERFASSUNG EINES SCHALTERS

DEVICE FOR DETECTING THE STATE OF A SWITCH

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **04.04.2006 FR 0602915**

(43) Date de publication de la demande:
**17.12.2008 Bulletin 2008/51**

(73) Titulaire: **AIRBUS OPERATIONS (S.A.S)
31060 Toulouse (FR)**

(72) Inventeurs:
• **BONNET, Guillaume
F-31380 Bazus (FR)**
• **DULAUR, Mathieu
F-31300 Toulouse (FR)**

(56) Documents cités:
**DE-A1- 10 124 910     DE-A1- 10 347 979
US-A- 5 488 323     US-A1- 2003 025 515**

**Description**

La présente invention concerne un dispositif de détection d'état d'un interrupteur permettant de détecter avec précision la fermeture et/ou l'ouverture d'un interrupteur.

**DOMAINE TECHNIQUE**

Un interrupteur dans la présente invention est un dispositif électronique permettant d'interrompre ou d'autoriser le passage d'un courant. Il existe différents types d'interrupteurs, tels que des interrupteurs à actionnement mécanique, électromagnétique, relais. La présente invention s'applique à tout type d'interrupteur pour lequel il existe, entre l'état ouvert et fermé, une différence mesurable dans la valeur d'une grandeur électrique, telle que par exemple, la tension aux bornes de l'interrupteur, la résistance de l'interrupteur, le courant traversant l'interrupteur, la puissance consommée par l'interrupteur ... Ladite grandeur électrique caractérise l'état de l'interrupteur.

**TECHNIQUE ANTERIEU RE**

A l'état normal, lorsqu'un interrupteur 1 ouvert (figure 1) se ferme (figure 2), la tension U a ses bornes est nulle (U=0) ou pratiquement nulle. Or lorsqu'un interrupteur n'est pas fréquemment utilisé, il arrive qu'il ne fonctionne plus correctement : comme le montre la figure 3, l'interrupteur 1 présente à ses bornes une résistance 2 appelée Rint non négligeable à l'état fermé. Les causes en sont multiples: humidité, contacts encrassés ... Comme le montre la figure 3, la tension U aux bornes de l'interrupteur est égale selon la loi d'Ohm au produit de sa résistance Rint par l'intensité du courant I qui le traverse (U=Rint*I).

Il en découle des conséquences sur la lecture de l'information transmise par l'interrupteur. Ainsi l'information relative à la fermeture du contact n'est pas transmise au moment souhaité ou même pas transmise du tout. A titre illustratif, des capteurs « Pitch trim » (interrupteurs) implantés sur un manche d'un pilote ou d'un copilote dans un cockpit d'avion permettent de rétablir le tangage de l'avion : en cas de mauvais fonctionnement de ces capteurs, l'information provenant de la manipulation du manche ne parvient plus ou mal aux calculateurs de vol et peuvent notamment induire des problèmes de sécurité.

Le document DE 103 47 979 A1 décrit un dispositif de détection d'état d'un interrupteur comprenant un interrupteur, un circuit d'alimentation dudit interrupteur et un circuit de détection délivrant un signal de valeur déterminée lorsque la valeur d'une grandeur électrique caractérisant l'état de l'interrupteur est inférieure à un seuil appelé seuil inférieur et un signal de valeur différente lorsque la valeur de ladite grandeur électrique est supérieure à un seuil différent du seuil inférieur, appelé seuil supérieur.

Un but de l'invention est de détecter l'ouverture et/ou la fermeture de l'interrupteur de manière précise afin que les informations transmises par l'interrupteur soient fiables et utilisables par le système recevant lesdites informations.

**EXPOSE DE l'INVENTION**

Le principe de la solution défini par la revendication 1 consiste à définir l'état fermé comme l'état ouvert par le passage d'un seuil dans la valeur d'une grandeur électrique caractérisant l'état de l'interrupteur et par exemple dans la valeur de la résistance de l'interrupteur : l'interrupteur est considéré comme fermé lorsque la valeur de la résistance de l'interrupteur est inférieure à Rfermé (par exemple 5kohms) et ouvert lorsque la valeur de la résistance de l'interrupteur est supérieure à Rouvert (par exemple 10ohms).

La présente invention pourrait également utiliser la valeur de la tension aux bornes de la résistance de l'interrupteur : l'interrupteur est considéré comme fermé lorsque la valeur de la tension aux bornes de l'interrupteur est inférieure à Vfermé et ouvert lorsque la valeur de la tension aux bornes de l'interrupteur est supérieure à Vouvert.

La présente invention porte sur un dispositif de détection d'état d'un interrupteur comprenant un interrupteur, un circuit d'alimentation dudit interrupteur caractérisé en ce qu'il comprend un circuit de détection délivrant un signal de valeur déterminée (VpullUp) lorsque la valeur d'une grandeur électrique (Rint) caractérisant l'état de l'interrupteur est inférieure à un seuil appelé seuil inférieur (Rfermé) et/ou un signal de valeur différente lorsque la valeur de ladite grandeur électrique est supérieure à un seuil différent du seuil inférieur, appelé seuil supérieur (Rouvert).

Un des avantages du dispositif selon la présente invention est la précision de détection de l'ouverture et fermeture de l'interrupteur quelque soit la dégradation physique de l'interrupteur. Même si l'interrupteur présente une résistance à l'état fermé, le dispositif détecte par le passage du courant ledit état.

Selon une forme particulière du dispositif de la présente invention, ladite grandeur électrique est la résistance Rint de l'interrupteur et le circuit (4) de détection délivre un signal lorsque la valeur de la résistance est inférieure à un seuil inférieur de résistance (R<Rfermé), et/ou un signal de valeur différente lorsque la valeur de la résistance est supérieure à un seuil supérieur de résistance (R>Rouvert).

L'un des signaux indique l'état de fermeture et l'autre signal l'état d'ouverture.

Ainsi, le dispositif selon la présente invention indique de manière claire et précise l'état d'ouverture et de fermeture de l'interrupteur.

Selon la dite forme particulière, le circuit de détection délivre en sortie deux valeurs de grandeurs différentes, une première valeur pour laquelle l'interrupteur est considéré à l'état fermé, lorsque la résistance Rint est inférieure à un premier seuil de résistance (R<Rfermé), une deuxième valeur pour laquelle l'interrupteur est considéré à l'état ouvert, lorsque la résistance Rint est supérieure à un deuxième seuil de résistance (R>Rouvert).

Selon une forme particulière du dispositif selon la présente invention, le dispositif comprend un circuit d'adaptation délivrant une tension fonction de la valeur de la résistance de l'interrupteur en entrée dudit circuit de détection.

Selon une forme particulière du circuit de détection selon la présente invention, le circuit de détection comprend un circuit hystérésis délivrant une première valeur de tension en sortie (VD=VpullUp) pour une tension en entrée inférieure à un premier seuil de tension (VHyHigh) et une deuxième valeur de tension en sortie (VD=0) pour une tension en entrée supérieure à un deuxième seuil de tension (VhyLow). Le circuit hystérésis comprend une alimentation et des résistances de valeurs telles qu'il fournit un courant permettant de nettoyer le contact de l'interrupteur.

Selon une forme particulière du circuit d'adaptation selon la présente invention, le circuit d'adaptation comprend un pont résistif délivrant une tension en sortie fonction de la valeur de la résistance de l'interrupteur, de résistances et d'une alimentation.

Selon une application particulière, la présente invention concerne un système de commande de vol équipé d'un dispositif de détection d'état d'un interrupteur selon la présente invention.

Selon une application particulière, la présente invention concerne un aéronef équipé d'un dispositif de détection d'état d'un interrupteur selon la présente invention.

## DESCRIPTION SOMMAIRE DES DESSINS

D'autres buts, avantages et caractéristiques de l'invention apparaîtront à la lecture de la description qui va suivre du dispositif selon l'invention, donné à titre d'exemple non limitatif en référence aux dessins ci-annexés dans lesquels :

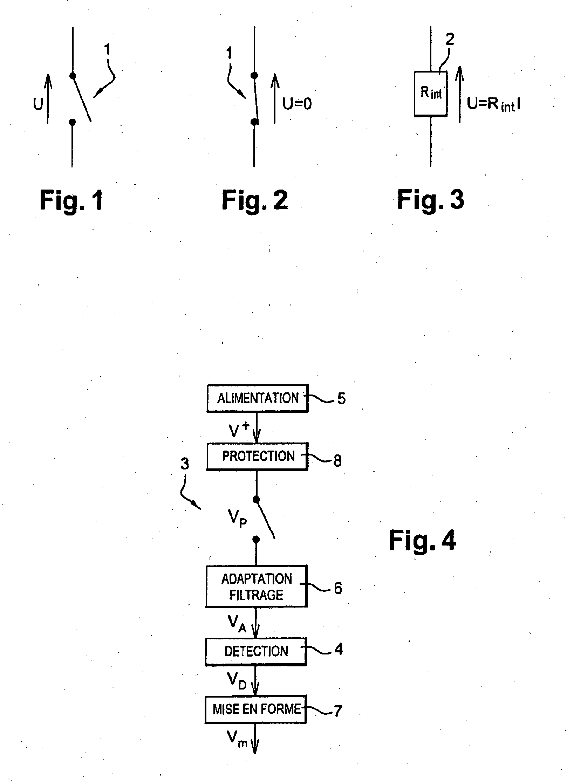

- les figures 1 et 2 sont une représentation schématique et théorique d'un interrupteur respectivement à l'état ouvert et à l'état fermé;
- la figure 3 représente de manière schématique un interrupteur à l'état fermé présentant en situation réelle une résistance non négligeable;
- la figure 4 est une représentation schématique simplifiée des différents circuits que comprend le dispositif selon la présente invention ;

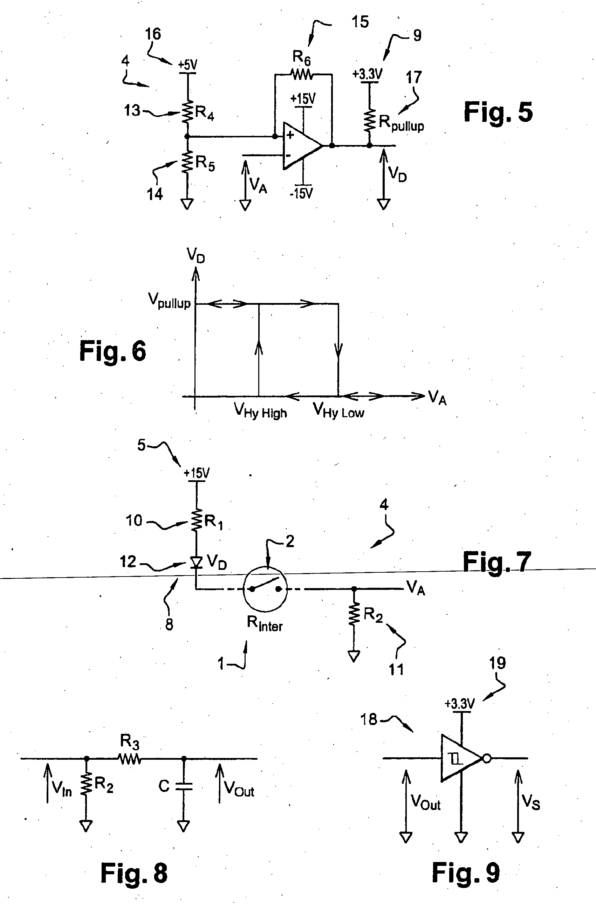

- la figure 5 test une représentation schématique électronique d'une forme de réalisation du circuit de détection représenté sur la figure 4;
- la figure 6 est un diagramme représentant le fonctionnement de la forme de réalisation du circuit de détection représenté sur la figure 5, à savoir les valeurs de tension en sortie en fonction des valeurs de tension en entrée dudit circuit de détection;
- la figure 7 est une représentation schématique électronique d'une forme de réalisation du circuit d'adaptation représenté sur la figure 4;
- la figure 8 est une représentation schématique électronique d'une partie du circuit d'adaptation complémentaire à celle représentée sur la figure 7;
- la figure 9 est une représentation schématique électronique d'une forme de réalisation du circuit de mise en forme représenté sur la figure 4 ;

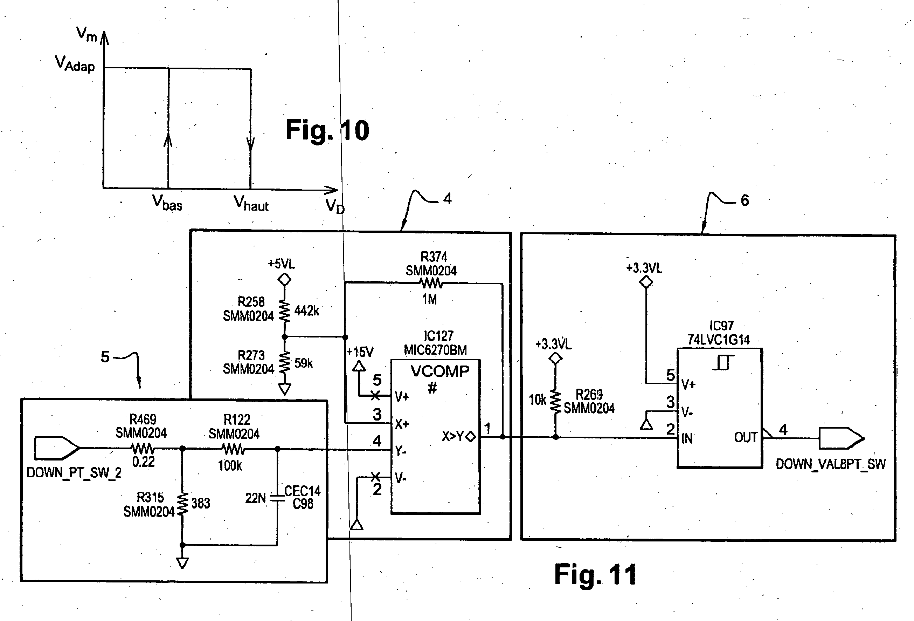

- la figure 10 est un diagramme représentant le fonctionnement de la forme de réalisation du circuit de mise en forme représenté sur la figure 9, à savoir les valeurs de tension en sortie en fonction des valeurs de tension en entrée dudit circuit de mise en forme;
- la figure 11 est une représentation schématique électronique d'une forme de réalisation du dispositif selon la présente invention.

## MANIERE DE REALISER L'INVENTION

Le dispositif 3 selon l'invention vise à détecter et communiquer les états d'un interrupteur 1 : l'état fermé et l'état ouvert. Pour ce faire, le dispositif 3 selon la présente invention se base sur une grandeur électrique caractérisant l'état de l'interrupteur 1 comme par exemple la tension aux bornes de l'interrupteur 1 (U=0 lorsque l'interrupteur est fermé ; U<>0 lorsque l'interrupteur est ouvert), la résistance de l'interrupteur (Rint=0 lorsque l'interrupteur est fermé ; Rint<>0 lorsque l'interrupteur est ouvert), le courant traversant l'interrupteur (i=0 lorsque l'interrupteur est ouvert ; U<>0 lorsque l'interrupteur est fermé) ...

Comme illustrée sur la figure 4, la présente invention comprend un circuit 4 de détection délivrant un signal de valeur déterminée indiquant l'état ouvert (ou fermé) lorsque la valeur de ladite grandeur est inférieure à un seuil et/ou un signal de valeur différente indiquant l'état fermé (ou ouvert) lorsque la valeur de ladite grandeur électrique est supérieure à un deuxième seuil différent du premier. De cette manière, malgré l'existence d'une résistance ou d'une tension non nulle aux bornes d'un interrupteur fermé, le dispositif détecte l'état fermé de l'interrupteur par l'intermédiaire du seuil (U<Useuil ou R<Rseuil).

Le dispositif 3 représenté sur la figure 4 comprend un circuit 4 de détection d'un interrupteur 1 alimenté par un circuit 5 d'alimentation, et de manière optionnelle un circuit 6 d'adaptation/filtrage, un circuit 7 de mise en forme et un circuit 8 de protection.

Le circuit 6 d'adaptation permet notamment de faire dépendre le signal transmis au circuit 4 de détection de la grandeur caractérisant l'état de l'interrupteur. Le circuit 7 de mise en forme modifie le signal délivré par le circuit 4 de détection pour être lu par le circuit devant recevoir l'information relative à l'état de l'interrupteur. Le circuit 8 de protection protège le circuit 5 d'alimentation de l'interrupteur 1.

Dans la forme de réalisation particulière illustrée sur les figures 5 à 11, la présente invention comporte un circuit 4 de détection permettant de délivrer un premier signal correspondant à l'état fermé lorsque la valeur de la résistance de l'interrupteur est inférieure à un seuil Rfermé (Rint<Rfermé) et de délivrer un deuxième signal correspondant à l'état ouvert lorsque la valeur de la résistance de l'interrupteur est supérieure à un seuil Rouvert (Rint>Rouvert) différent dudit seuil Rfermé. Il existe une plage de valeurs de résistance d'interrupteur pour laquelle l'état est indéfini, entre Rfermé et Rouvert. Les circuits peuvent être conçus pour indiquer l'état fermé lorsque la valeur de la résistance de l'interrupteur est supérieure à un seuil Rouvert (Rint>Rouvert) et l'état ouvert lorsque la valeur de la résistance de l'interrupteur est inférieure à un seuil Rfermé (Rint<Rfermé), différent dudit seuil Rouvert. Dans la forme de réalisation détaillée ci-après et comme il sera compris plus loin, il suffit par exemple d'inverser le circuit trigger représenté sur la figure 9.

Comme représenté sur la figure 4, l'interrupteur 1 est alimenté par un circuit 5 d'alimentation.

Pour détecter la valeur de la résistance de l'interrupteur, la présente invention comprend un circuit 6 d'adaptation permettant avec le circuit 5 d'alimentation de faire dépendre la grandeur (par exemple une tension VA) transmise au circuit 4 de détection, de la résistance de l'interrupteur Rint. Le circuit d'adaptation adapte la grandeur caractérisant l'état de l'interrupteur (dans l'exemple illustré Rint) pour la transmission au circuit 4 de détection (dans l'exemple illustré au travers d'une tension $V_A$). Le circuit 6 d'adaptation a également pour fonction de faire passer suffisamment de courant dans la résistance de l'interrupteur Rint à l'état fermé pour « nettoyer le contact de l'interrupteur ».

Le circuit 6 d'adaptation est optionnel : en effet, dans certaines formes de réalisation de la présente invention, le circuit 4 de détection peut détecter directement la grandeur caractérisant l'état de l'interrupteur (lorsque la grandeur utilisée est une tension par exemple).

Le dispositif 3 comprend de manière optionnelle un circuit 7 de mise en forme permettant l'adaptation de l'information communiquée par le circuit 4 de détection (par exemple une tension $V_D$) avec le système destiné à la recevoir, comme par exemple dans le cas précédemment mentionné du capteur « Pitch Trim », l'adaptation aux contraintes imposées par le calculateur. Dans l'exemple illustré, le capteur est connecté au calculateur de vol au travers d'un FPGA (Field Programmable Gate Array - Réseau de portes programmables in-situ) : le circuit 7 met en forme le signal délivré par le circuit 6 d'adaptation VA pour être lu par le FPGA. En effet, le FPGA requiert des fronts de montée et de descente rapides dépendant du type de composant. Le circuit de mise en forme redresse les fronts pour la lecture par le FPGA.

Selon une forme illustrative de réalisation particulière de l'invention représentée sur la figure 5, le circuit 4 de détection comprend un comparateur 9 hystérésis. La figure 6 représente la tension $V_D$ délivrée par le comparateur hystérésis en fonction de la tension d'entrée $V_A$. Le circuit 4 de détection délivre une tension en sortie $V_D$ qui dépend de la tension présente en entrée VA. Dans la présente forme de réalisation, comme il sera décrit en détail plus loin, le circuit 6 d'adaptation et le circuit 5 d'alimentation permettent de délivrer une tension $V_A$ en entrée du circuit 4 de détection qui est fonction de la résistance de l'interrupteur (Rint). Ainsi, le circuit 4 de détection délivre en sortie un signal $V_D$ qui est fonction de la résistance de l'interrupteur Rint. Les valeurs des composants, et en particulier des résistances et des alimentations inclues dans les deux circuits sont choisies de manière à détecter les résistances souhaitées pour définir les états d'ouverture et de fermeture.

La description qui suit décrit plus en détail le fonctionnement, de chacun des circuits dans les formes représentées sur les figures 5 à 11.

Comme montré sur la figure 7, les circuits 8 de protection et 6 d'adaptation ne sont pas dissociés comme illustré sur la figure 4. Selon les formes de réalisation, les circuits réalisant les fonctions illustrées sur la figure 4 peuvent être organisés différemment. L'interrupteur 1 est alimenté par un circuit 5 d'alimentation de +15V. La tension d'alimentation et/ou les valeurs des résistances 10 (R1) et 11 (R2) sont ajustées de manière à fournir suffisamment de courant pour « nettoyer le contact de l'interrupteur ». Le circuit 6 d'adaptation permet la lecture de la résistance de l'interrupteur 1 Rint au travers d'un pont résistif constitué par les résistances 10 (R1), 2 (Rint) et 11 (R2), l'alimentation 5 et la tension délivrée au circuit 4 de détection $V_A$.

La tension $V_A$ de manière connue vaut pour un pont résistif du type illustré sur la figure 7 :

$$V_A = \frac{+15 * R2}{R1 + R2 + Rint}$$

La tension $V_A$ délivrée au circuit 4 de détection est ainsi fonction de la résistance 2 de l'interrupteur Rint.

Le circuit 6 d'adaptation comprend une diode 12 comprise entre l'alimentation 5 de l'interrupteur et l'entrée de l'interrupteur 1. Dans la forme de réalisation illustrée, la diode 12 se trouve entre la sortie de la résistance 10 et l'entrée de l'interrupteur 1. La diode protège l'alimentation 5 de l'interrupteur 1 contre d'éventuelles tensions VA de valeur trop élevée (dans le cas présent, supérieure à +15V) appliquée par mégarde sur la diode 12 lorsque l'interrupteur 1 n'est pas branché au circuit 4 de détection. La tension VA délivrée en entrée du circuit 4 de détection a alors pour valeur :

$$V_A = \frac{(+15 - Vd) * R2}{R1 + R2 + Rint}$$

et dépend donc toujours de la résistance 2 de l'interrupteur (Rint).

L'alimentation 5 doit également être protégée contre une connexion à la masse de la diode 12 : il s'agit dans ce cas d'un court-circuit à la masse de l'alimentation. A cet effet, les valeurs des résistances sont choisies afin d'éviter que la résistance 10 ne dissipe trop de puissance.

Les valeurs des résistances R1 et R2 sont choisies pour avoir un courant minimum dit « courant de nettoyage » (par exemple de l'ordre de 10mA) circulant dans l'interrupteur 1 en position fermée et une tension $V_A$ pas trop importante au regard de la tension admissible par le circuit hystérésis (par exemple de l'ordre de 5V). Or le courant I circulant dans l'interrupteur est :

$$I = \frac{+15 - Vd}{R1 + R2 + Rint}$$

Les résistances 10 et 11 (R1 et R2) sont donc choisies dans l'exemple illustrée pour que I>10ma et U<5V lorsque la résistance de l'interrupteur tend à être proche de zéro. Il est effectivement nécessaire que la tension $V_A$ ne soit pas supérieure à la tension admissible par le comparateur hystérésis.

Le circuit 6 d'adaptation peut également apporter la fonction de filtrage. La figure 8 représente le sous-ensemble de filtrage à connecter à la sortie du circuit représenté sur la figure 7.

La résistance R2 du circuit représentée sur la figure 8 correspond à celle représentée sur la figure 7 ; comme vu précédemment, elle entre dans le calcul de la tension VA. Le réseau R3C présenté par la figure 8 est un filtre de fréquence de coupure:

$$f_C = \frac{1}{2\pi . R_3 . C}$$

Selon une forme de réalisation particulière, la résistance R3 est fixée à 100 kΩ. De façon à ce que la fréquence de coupure en sortie de ce bloc soit comprise entre 50 Hz et 100 Hz, la valeur de la capacité C doit donc être égale à 22nF. La fréquence de coupure obtenue est faible de façon à filtrer les rebonds éventuels de l'interrupteur ou provenant d'erreurs de manipulations.

La tension VA qui est fonction de la valeur de la résistance 2 de l'interrupteur comme vu précédemment est appliquée à l'entrée du circuit 9 hystérésis. Comme le montre la figure 6 représentant les valeurs de tension en sortie en fonction des valeurs de tension en entrée du circuit hystérésis, la tension de sortie $V_D$ prend deux valeurs différentes selon la tension d'entrée $V_A$ : lorsque la tension en entrée $V_A$ est inférieure à VHy High, la tension en sortie du circuit $V_D$ est égale à Vpullup et lorsque la tension en entrée $V_A$ est supérieure à VHy Low, la tension en sortie du circuit est égale à zéro. Le circuit hystérésis permet donc de détecter l'ouverture et la fermeture de l'interrupteur avec précision : comme vu précédemment l'interrupteur est considéré comme fermé lorsque la résistance Rint de l'interrupteur est inférieure à la valeur seuil Rfermé (lié à Vhy High) (par exemple 5kohms). Lorsque la résistance Rint de l'interrupteur est inférieure à la valeur seuil Rfermé (lié à Vhy Low),

- la tension en entrée du circuit hystérésis, étant égale à la tension $V_A$ de sortie du circuit d'adaptation et donc fonction de la résistance de l'interrupteur Rint (et plus précisément de 1/Rint selon la formule explicitée précédemment), est supérieure à une tension seuil VHy Low ;
- la tension en sortie du circuit hystérésis est alors égale à 0.

Ainsi, lorsque la tension de sortie du circuit 9 hystérésis est égale à 0, l'interrupteur est considéré comme fermé car il envoie un signal en sortie du circuit 7 de mise en forme (trigger 18), ie comme il sera vu plus loin dans la forme de réalisation décrite, correspondant à un état haut.

Tant que la résistance Rint de l'interrupteur reste inférieure à la deuxième valeur seuil Rouvert, soit tant que la tension en entrée du circuit hystérésis est supérieure à la tension seuil VHy High, la tension en sortie du circuit hystérésis est égale à 0. L'interrupteur est considéré comme fermé.

De même, l'interrupteur est considéré comme ouvert lorsque la résistance Rint de l'interrupteur est supérieure à la valeur seuil Rouvert (par exemple 10kohms). Lorsque la résistance Rint de l'interrupteur est supérieure à la valeur seuil Rouvert,

- la tension en entrée du circuit hystérésis, étant égale à la tension $V_A$ de sortie du circuit d'adaptation et donc fonction de la résistance de l'interrupteur Rint (et plus précisément de 1/Rint selon la formule explicitée précédemment), est inférieure à une tension seuil VHy High ; .
- la tension en sortie du circuit hystérésis est alors égale à VPullUp.

Ainsi, lorsque la tension de sortie du circuit 7 hystérésis est égale à VPullUp, l'interrupteur est considéré comme fermé car il envoie un signal en sortie du circuit 7 de mise en forme (trigger 18), ie comme il sera vu plus loin dans la forme de réalisation décrite, correspondant à un état bas.

Tant que la résistance Rint de l'interrupteur reste supérieure à la deuxième valeur seuil Rfermé, soit tant que la tension en entrée du circuit hystérésis est inférieure à la tension seuil VHy Low , la tension en sortie du circuit hystérésis est égale à VPullUp. L'interrupteur est considéré comme ouvert.

Ainsi lorsque la résistance Rint de l'interrupteur est comprise entre la valeur seuil fermé Rfermé et la valeur seuil ouvert Rouvert ou égale à ces valeurs seuil, la tension en sortie du circuit hystérésis conserve la valeur de l'état précédent.

Si lors de la mise en fonction ou d'une réinitialisation ou équivalent, la résistance prend une valeur comprise entre Rouvert et Rfermé, le circuit délivre une valeur par défaut. Une temporisation est prévue en aval du présent dispositif pour laisser le temps à celui-ci de délivrer un signal correspondant à l'état de l'interrupteur.

Le tableau ci-dessous associe la tension de sortie du circuit 4 $V_D$ aux valeurs de la tension d'entrée, apportant ainsi une information sur la valeur de la résistance de l'interrupteur:

|  | Résistance de l'interrupteur | Tension $V_A$ | Tension $V_D$ |
|---|---|---|---|
| Interrupteur fermé | < Rfermé(5kΩ) | > $V_{hy\ Low}$ | 0 V |
| Interrupteur ouvert | > Rouvert(10kΩ) | < $V_{hy\ high}$ | $V_{Pullup}$ |
| Interrupteur fermé | Rfermé≤R≤Rouvert Et $V_D$ (t-1)=0 | > $V_{hy\ Low}$ | 0 V |
| Interrupteur ouvert | Rfermé≤R≤Rouvert Et $V_D$ (t-1) =VPullUp | < $V_{hy\ high}$ | VPullUp |

$V_D$ (t-1) signifie la valeur de $V_D$ à l'instant précédent.

Les résistances Rfermé et Rouvert sont choisies de manière à délivrer un signal correspondant à l'état précis de l'interrupteur. Ainsi, si pour l'interrupteur choisi, la valeur seuil Rfermé en deçà de laquelle l'interrupteur est considéré comme fermé par le constructeur est 4kΩ, la valeur choisie pourrait être par exemple 5kΩ pour assurer une marge d'erreur. En revanche, les valeurs seuil seront choisies de manière qu'il n'y ait aucun recouvrement possible entre celles-ci : il ne sera pas possible d'avoir Rfermé≤Rouvert. Ainsi, chaque valeur de résistance est représentatif d'un état unique de l'interrupteur. De cette manière, le dispositif délivre une information précise et fiable sur l'ouverture ou la fermeture de l'interrupteur.

De manière connue, les seuils hystérésis VHy Low et VHy High sont obtenus par des formules classiques dépendant des résistances et alimentation du circuit 9 hystérésis représenté sur la figure 5 :

$$V_{Hy\ High} = \frac{5V.R_5.R_6}{R_4.R_5 + R_4.R_6 + R_5.R_6}$$

$$V_{Hy\ Low} = \frac{5V.R_5.R_6}{R_4.R_5 + R_4.R_6 + R_5.R_6} + \frac{3.3V.R_4.R_5}{R_4.R_5 + R_4.R_6 + R_5.R_6}$$

Les valeurs des résistances 13 (R4), 14(R5) et 15 (R6) et d'alimentation 16 (ici, +5V) du circuit hystérésis sont donc choisies de manière à avoir une tension VHy Low correspondant à une résistance de l'interrupteur de Rfermé=5kΩ et une tension VHy High correspondant à une résistance de l'interrupteur de Rouvert=10kΩ. Les valeurs de seuil de 5kΩ et 10kΩ sont choisies de manière à caractériser le mieux possible l'état d'ouverture et de fermeture de ladite résistance après l'avoir testée. Ces valeurs sont donc données à titre illustratif et ne doivent en aucun cas être limitatives. Les valeurs des tensions VHy Low et VHy High sont obtenues avec la formule donnée plus haut :

$$VHy\ Low = \frac{(+15-Vd)*R2}{R1 + R2 + Rint} \quad avec\ Rint=Rfermé=5kΩ$$

$$VHy\ High = \frac{(+15-Vd)*R2}{R1 + R2 + Rint} \quad avec\ Rint=Rouvert=10kΩ$$

La résistance 17 Rpullup (figure 5) doit être inférieure à la résistance 15 (R6) de manière à ne pas faire chuter la tension en sortie du comparateur hystérésis $V_D$ lorsqu'elle est à l'état haut (égale à Vpullup).

Selon une forme de réalisation illustrative de la présente invention, le circuit 7 de mise en forme (figure 4) comprend un circuit 18 trigger de Schmitt : une représentation du circuit 18 de type connu est donnée sur la figure 9. Le circuit 18 rehausse le niveau de tension $V_D$ de sortie du circuit 4 de détection de manière à le rendre compatible si nécessaire avec le circuit recevant en entrée la tension de sortie $V_D$. Dans l'exemple utilisé ci-dessus dans la présente description, l'interrupteur est un capteur de position connecté à un calculateur de vol au travers d'un FPGA : la tension de sortie $V_D$ du circuit de détection est rehaussée à l'aide du circuit 18 trigger afin d'optimiser le traitement des données et dans l'exemple illustré, comme vu précédemment pour améliorer les fronts de montée et de descente. Les niveaux de tension de sortie de seuil du trigger dépendent de l'alimentation 19 qui peut être du +3.3 Volts ou autre. Le seuil Vhaut du circuit 18 trigger est choisi de manière que $V_{PullUp} > V_{haut}$.

La figure 10 représente les valeurs de tension en sortie du trigger en fonction des valeurs de tension en entrée. Lorsque la tension en entrée est égale à 0, la tension en sortie est égale à $V_{ADAPT}$ : l'interrupteur 1 est considéré comme fermé. Lorsque la tension en entrée est égale à VpullUp (VpullUp étant supérieure à $V_{haut}$) la tension en sortie est égale à 0 : l'interrupteur est considéré comme ouvert. La tension Vadapt est réhaussée par rapport à la tension VpullUp pour l'adapter lors de la transmission au circuit recevant la tension Vm.

La figure 11 représente un exemple de forme de réalisation du dispositif 3. Le dispositif 3 comprend un circuit 5 d'adaptation, un circuit 4 de détection, et un circuit 6 de mise en forme.

## Revendications

1. Dispositif de détection d'état d'un interrupteur comprenant un interrupteur (1), un circuit d'alimentation (5) dudit interrupteur (1) et un circuit (4) de détection délivrant un signal de valeur déterminée (VpullUp) lorsque la valeur d'une grandeur électrique (Rint) caractérisant l'état de l'interrupteur est inférieure à un seuil appelé seuil inférieur (Rfermé) et/ou un signal de valeur différente lorsque la valeur de ladite grandeur électrique est supérieure à un seuil différent du seuil inférieur, appelé seuil supérieur (Rouvert), **caractérisé en ce qu'**il comprend un circuit (6) d'adaptation permettant la lecture de la résistance (Rint) de l'interrupteur (1) au travers d'un pont résistif constitué par des résistances (2,10,11), l'alimentation (5) et la tension délivrée au circuit (4) de détection VA et **en ce que** la tension d'alimentation et/ou les valeurs des résistances (10,11) du pont sont ajustées de manière à fournir un courant de nettoyage du contact de l'interrupteur.

2. Dispositif de détection d'état d'un interrupteur selon la revendication 1, **caractérisé en ce que** lorsque la valeur de ladite grandeur électrique (Rint) est comprise entre la valeur seuil inférieure et la valeur seuil supérieure ou égale à ces valeurs seuil, le circuit délivre un signal identique à celui de l'état précédent.

3. Dispositif selon l'une des revendications 1 ou 2, **caractérisé en ce que** ladite grandeur électrique est la résistance (2) Rint de l'interrupteur (1) et **en ce que** le circuit (4) de détection délivre un signal lorsque la valeur de la résistance (2) est inférieure à un seuil inférieur de résistance (R<Rfermé), et/ou un signal de valeur différente lorsque la valeur de la résistance (2) est supérieure à un seuil supérieur de résistance (R>Rouvert).

4. Dispositif de détection selon l'une des revendications 1 à 3, **caractérisé en ce que** l'un des signaux indique l'état de fermeture et l'autre signal l'état d'ouverture.

5. - Dispositif de détection selon l'une des revendications 1 à 4, **caractérisé en ce que** le circuit (4) de détection délivre en sortie deux valeurs de grandeurs différentes, une première valeur pour laquelle l'Interrupteur est considéré à l'état fermé, lorsque la résistance Rint est inférieure à un premier seuil de résistance (R<Rfermé), une deuxième valeur pour laquelle l'interrupteur est considéré à l'état ouvert, lorsque la résistance Rint est supérieure à un deuxième seuil de résistance (R>Rouvert).

6. Dispositif selon l'une des revendications 3 à 5, **caractérisé en ce que** le circuit (4) de détection comprend un circuit (7) hystérésis délivrant une première valeur de tension en sortie (VD=VpullUp) pour une tension en entrée inférieure à un premier seuil de tension (VHyHigh) et une deuxième valeur de tension en sortie (VD=0) pour une tension en entrée supérieure à un deuxième seuil de tension (VhyLow).

7. Dispositif selon l'une quelconque des revendications précédentes, **caractérisé en ce que** le circuit (5) d'adaptation comprend un pont résistif délivrant une tension de sortie fonction de la valeur de la résistance (2) de l'interrupteur, de résistances (10, 11) et d'une alimentation (9).

**8.** Dispositif selon la revendication 6, **caractérisé en ce que** le circuit hystérésis comprend une alimentation et des résistances de valeurs telles qu'il fournit un courant permettant de nettoyer le contact de l'interrupteur.

**9.** Système de commande de vol **caractérisé en ce qu'**il comprend un dispositif selon l'une des revendications 1 à 8.

**10.** Aéronef **caractérisé en ce qu'**il comprend le dispositif selon l'une des revendications 1 à 8.

**Patentansprüche**

**1.** Vorrichtung zur Zustandserfassung eines Schalters, welche Folgendes aufweist: einen Schalter (1), eine Versorgungsschaltung (5) des Schalters (1) und eine Erfassungsschaltung (4), die ein Signal mit einem bestimmten Wert (VpullUp) liefert, wenn der Wert einer elektrischen Größe (Rint), die den Zustand des Schalters charakterisiert, kleiner als ein unterer Schwellenwert (Rfermé) genannter Schwellenwert ist, und/oder ein Signal mit einem anderen Wert, wenn der Wert der elektrischen Größe größer als ein oberer Schwellenwert (Rouvert) genannter, von dem unteren Schwellenwert verschiedener Schwellenwert ist, **dadurch gekennzeichnet, dass** sie eine Anpassungsschaltung (6) aufweist, die das Messen des Widerstands (Rint) des Schalters (1) über eine aus Widerständen (2, 10, 11) bestehende Widerstandsbrücke, die Versorgungsschaltung (5) und die der Erfassungsschaltung (4) zugeführte Spannung VA ermöglicht, und dadurch, dass die Versorgungsspannung und/oder die Werte der Widerstände (10, 11) der Brücke so eingestellt sind, dass ein Reinigungsstrom für den Kontakt des Schalters geliefert wird.

**2.** Vorrichtung zur Zustandserfassung eines Schalters nach Anspruch 1, **dadurch gekennzeichnet, dass**, wenn der Wert der elektrischen Größe (Rint) zwischen dem unteren Schwellenwert und dem oberen Schwellenwert liegt oder gleich diesen Schwellenwerten ist, die Schaltung ein Signal liefert, das mit demjenigen des vorhergehenden Zustands identisch ist.

**3.** Vorrichtung nach einem der Ansprüche 1 oder 2, **dadurch gekennzeichnet, dass** die elektrische Größe der Widerstand (2) Rint des Schalters (1) ist, und dadurch, dass die Erfassungsschaltung (4) ein Signal liefert, wenn der Wert des Widerstands (2) kleiner als ein unterer Schwellenwert des Widerstands ist (R < Rfermé), und/oder ein Signal mit einem anderen Wert, wenn der Wert des Widerstands (2) größer als ein oberer Schwellenwert des Widerstands ist (R > Rouvert).

**4.** Erfassungsvorrichtung nach einem der Ansprüche 1 bis 3, **dadurch gekennzeichnet, dass** das eine der Signale den Schließzustand und das andere Signal den Öffnungszustand anzeigt.

**5.** Erfassungsvorrichtung nach einem der Ansprüche 1 bis 4, **dadurch gekennzeichnet, dass** die Erfassungsschaltung (4) am Ausgang zwei Werte mit unterschiedlichen Größen liefert, einen ersten Wert, für den der Schalter als im geschlossenen Zustand befindlich betrachtet wird, wenn der Widerstand Rint kleiner als ein erster Widerstandsschwellenwert ist (R < Rfermé), und einen zweiten Wert, für den der Schalter als im offenen Zustand befindlich betrachtet wird, wenn der Widerstand Rint größer als ein zweiter Widerstandsschwellenwert ist (R > Rouvert).

**6.** Vorrichtung nach einem der Ansprüche 3 bis 5, **dadurch gekennzeichnet, dass** die Erfassungsschaltung (4) eine Hystereseschaltung (7) aufweist, die einen ersten Ausgangsspannungswert (VD = VpullUp) für eine Eingangsspannung liefert, die kleiner als ein erster Spannungsschwellenwert (VHyHigh) ist, und einen zweiten Ausgangsspannungswert (VD = 0) für eine Eingangsspannung, die größer als ein zweiter Spannungsschwellenwert (VhyLow) ist.

**7.** Vorrichtung nach einem der vorhergehenden Ansprüche, **dadurch gekennzeichnet, dass** die Anpassungsschaltung (5) eine Widerstandsbrücke aufweist, die eine Ausgangsspannung liefert, welche von dem Wert des Widerstands (2) des Schalters, von Widerständen (10, 11) und von einer Versorgung (9) abhängt.

**8.** Vorrichtung nach Anspruch 6, **dadurch gekennzeichnet, dass** die Hystereseschaltung eine Versorgung und Widerstände mit solchen Werten aufweist, dass sie einen Strom liefert, der es ermöglicht, den Kontakt des Schalters zu reinigen.

**9.** Flugsteuerungssystem, **dadurch gekennzeichnet, dass** es eine Vorrichtung nach einem der Ansprüche 1 bis 8 aufweist.

**10.** Luftfahrzeug, **dadurch gekennzeichnet, dass** es die Vorrichtung nach einem der Ansprüche 1 bis 8 aufweist.

**Claims**

1. Device for detecting the state of a switch comprising a switch (1), a power supply circuit (5) for the said switch (1) and a detection circuit (4) delivering a signal of determined value (VpullUp) when the value of an electrical quantity (Rint) characterizing the state of the switch is below a threshold called the lower threshold (Rclosed) and/or a signal of different value when the value of the said electrical quantity is above a threshold different from the lower threshold, called the upper threshold (Ropen), **characterized in that** it comprises an adaptation circuit (6) allowing the reading of the resistance (Rint) of the switch (1) across a resistive bridge consisting of resistors (2, 10, 11), the power supply (5) and the voltage delivered to the detection circuit (4) VA and **in that** the supply voltage and/or the values of the resistors (10, 11) of the bridge are adjusted in such a way as to provide a current for cleaning the contact of the switch.

2. Device for detecting the state of a switch according to Claim 1, **characterized in that** when the value of the said electrical quantity (Rint) lies between the lower threshold value and the upper threshold value or is equal to these threshold values, the circuit delivers a signal identical to that of the previous state.

3. Device according to Claim 1 or 2, **characterized in that** the said electrical quantity is the resistance (2) Rint of the switch (1) and **in that** the detection circuit (4) delivers a signal when the value of the resistance (2) is below a lower resistance threshold (R<Rclosed), and/or a signal of different value when the value of the resistance (2) is above an upper resistance threshold (R>Ropen).

4. Detection device according to one of Claims 1 to 3, **characterized in that** one of the signals indicates the closure state and the other signal the opening state.

5. Detection device according to one of Claims 1 to 4, **characterized in that** the detection circuit (4) delivers as output two values of different sizes, a first value for which the switch is considered in the closed state, when the resistance Rint is below a first resistance threshold (R<Rclosed), a second value for which the switch is considered in the open state, when the resistance Rint is above a second resistance threshold (R>Ropen).

6. Device according to one of Claims 3 to 5, **characterized in that** the detection circuit (4) comprises a hysteresis circuit (7) delivering a first voltage value as output (VD=VpullUp) for a voltage at input below a first voltage threshold (VHyHigh) and a second voltage value as output (VD=0) for a voltage at input above a second voltage threshold (VhyLow).

7. Device according to any one of the preceding claims, **characterized in that** the adaptation circuit (5) comprises a resistive bridge delivering an output voltage dependent on the value of the resistance (2) of the switch, of resistors (10,11) and of a power supply (9).

8. Device according to Claim 6, **characterized in that** the hysteresis circuit comprises a power supply and resistors of values such that it provides a current making it possible to clean the contact of the switch.

9. Flight control system **characterized in that** it comprises a device according to one of Claims 1 to 8.

10. Aircraft **characterized in that** it comprises the device according to one of Claims 1 to 8.

Fig. 1

Fig. 2

Fig. 3

Fig. 4

Fig. 5

Fig. 6

Fig. 7

Fig. 8

Fig. 9

**Fig. 10**

$V_m$

$V_{Adap}$

$V_{bas}$    $V_{haut}$    $V_D$

4

6

5

+5VL

R374
SMM0204
1M

R258
SMM0204    442k

+3.3VL

IC97
74LVC1G14

R273
SMM0204    59k

IC127
MIC6270BM

+3.3VL

+15V

VCOMP
#

10k    R269
SMM0204

5    V+

R469
SMM0204

R122
SMM0204

5    V+

3    X+

3    V-

0.22

100k

4    Y-

X>Y◇    1

2    IN    OUT    4

DOWN_PT_SW_2

R315
SMM0204    383

22N    CEC14
C98

V-

2

DOWN_VAL8PT_SW

**Fig. 11**

**EP 2 002 455 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10347979 A1